(19) Europäisches Patentamt
European Patent Office
Office européen des brevets

(11) EP 1 048 707 A1

(12) EUROPEAN PATENT APPLICATION
published in accordance with Art. 158(3) EPC

(43) Date of publication:
**02.11.2000 Bulletin 2000/44**

(21) Application number: **98932575.8**

(22) Date of filing: **17.07.1998**

(51) Int. Cl.[7]: **C09J 4/06**, B32B 7/12, B32B 5/18

(86) International application number:
**PCT/JP98/03227**

(87) International publication number:
**WO 99/35200 (15.07.1999 Gazette 1999/28)**

(84) Designated Contracting States:
**AT BE CH CY DE DK ES FI FR GB GR IE IT LI LU MC NL PT SE**

(30) Priority: **12.01.1998 JP 1639598**
**13.02.1998 JP 4877998**

(71) Applicant:
**Showa Denko Kabushiki Kaisha**
**Tokyo 105-8518 (JP)**

(72) Inventors:
- **SYGITA, Shuichi,**
  **Showa Denko K.K.**
  **Tokyo 105-8518 (JP)**
- **WATANABE, Takeo,**
  **Central Research Laboratory**
  **Chiba-shi, Chiba 267-0056 (JP)**
- **OOGA, Kazuhiko,**
  **Central Research Laboratory**
  **Ooita-shi, Ooita 870-0111 (JP)**
- **KIMURA, Yoshio,**
  **Showa Denko K.K.**
  **Tokyo 105-8518 (JP)**
- **WATANABE, Yoshihiro**
  **Shinnanyo-shi, Yamaguchi 746-0006 (JP)**

(74) Representative:
**Strehl Schübel-Hopf & Partner**
**Maximilianstrasse 54**
**80538 München (DE)**

# (54) PHOTOCURABLE ADHESIVE COMPOSITION, RESIN LAMINATE MADE BY USING THE SAME, AND PROCESS FOR PRODUCING THE SAME

(57) The present invention relates to a photocurable adhesive composition containing a chlorinated polyolefin, a compound having a polymerizable unsaturated group and a photopolymerization initiator as essential components, if necessary a tackifier, and a resin layered material using the adhesive composition, and a production method thereof.

Using the photocurable adhesive composition of the present invention enables substrate and resin foam layered on the backside of facing material to be bonded with excellent adhesion performance, without any pretreatment such as primer treatment, to produce resin layered material exhibiting excellent mechanical performance in rigidity, heat resistance and impact resistance.

EP 1 048 707 A1

## Description

TECHNICAL FIELD

The present invention relates to a photocurable adhesive composition, to a resin layered material which is bonded by use of the adhesive and to a production method thereof. In particular, the present invention relates to a photocurable adhesive composition, with which a resin substrate and a resin foam such as a polypropylene foam layered on the backside of a facing material such as vinyl chloride leather are able to be bonded to each other with an excellent adhesion without any particular pretreatment or primer, to produce a layered material having excellent mechanical properties such as rigidity, heat resistance, and impact resistance; to resin layered material using the adhesive and to a production method thereof.

BACKGROUND ART

Among thermoplastic resins, olefin polymers(particularly propylene polymers) are produced for a broad range of industrial uses and are used widely as parts of automobiles, electric appliances, electronic appliances and commodities for daily use, etc. due not only to their excellent moldability but also to their remarkable properties such as mechanical properties, electric properties, heat resistance, water resistance, solvent resistance, oil resistance, chemical resistance, light weight, and inexpensiveness. For example, in the case of automotive parts, weight reduction is sought by use of plastics such as propylene polymers with an aim toward saving energy, and the amount of the plastics used has increased year by year. However, propylene polymers have no polar group in the molecules and have extremely low solubility to almost all organic solvents. Therefore, problems during use arise from extremely poor adhesion to a variety of adhesives. To illustrate, a description will be given with respect to a door lining, a type of interior part for an automobile.

Generally, a door lining for an automobile employs vinyl chloride leather as a facing material, and the vinyl chloride leather is laminated with a resin foam such as a polypropylene foam, a polyethylene foam, or a polyurethane foam for use. However, the layered materials have such poor rigidity that they cannot be used in this application. In order to secure rigidity for lining materials, there is used a molded resin such as an ABS resin or a board formed of a polypropylene resin incorporated with filler such as wood powder serving as a substrate, which is bonded to the resin foam side of the above layered materials by use of adhesive.

In recent years, inexpensive propylene polymers having excellent moldability have been used instead of an ABS resin or polypropylene resins containing wood powder under a trend of decreasing the weight and cost of an automobile.

However, as described above, propylene polymers having no polar group in the molecule are very inert chemically. At present, when a molded product of propylene polymer is used with a layered material produced by laminating vinyl chloride leather with a polypropylene foam, a polyethylene foam, or a polyurethane foam, etc, the molded product (door lining) is undercoated with a primer having high affinity to propylene polymers or subjected to pretreatment such as plasma treatment, corona discharge treatment, or UV treatment, and subsequently coated with an adhesive for bonding to the above-described layered material of vinyl chloride leather. As a result, a step for producing door linings requires a long time, and such a step is one factor in increasing production costs. A similar problem arises during production, including the step of bonding vinyl chloride leather, of other interior materials, i.e., instrument panels, pillars, ceiling materials, armrests, and other linings in which propylene polymers are used.

In order to resolve these problems, there have been proposed resin layered materials, e.g., a resin layered material which employs a propylene polymer as a molded resin substrate bonding to a facing material layered with a resin foam on the backside, having a specific composition in order to improve adhesion to an adhesive and to eliminate pretreatment such as primer treatment (e.g., Japanese Patent Application Laid-Open (*kokai*) No. 7-125120), and a resin layered material which employs an ethylenic terpolymer as a adhesive layer having good adhesion to both a molded product substrate and a resin foam, in order to eliminate pretreatment (e.g., Japanese Patent Application Laid-Open (*kokai*) No. 7-125121).

However, the method employing a propylene polymer having a specific composition excludes use of widely-used propylene polymers and suffers an economical problem stemming from the cost of the polymer. The method employing an ethylenic terpolymer requires expensive apparatus for production of the terpolymer and adhesion of the substrate. Therefore, there has been demand for developing an adhesive composition which can produce resin layered material simply and economically.

Meanwhile, photocuring reaction is applied to a broad range of uses such as curing of coatings; adhesions; printing; production of relief printing resin plates and printed boards; curing of resists or photomasks; or production of black-and-white or color transfer coloring sheets. Recently, in particular, photocuring has been extensively developed due to characteristics of photopolymerization such as polymerizability at normal temperature, a fast drying property,

and possibilities of no need for solvents, which effects are beneficial in view of global environmental issues, energy conservation, and saving labor costs.

Presently, application of UV beam-curing to uses in the field of adhesives is being discussed; however, in the majority of cases a substrate to be bonded has no transparency to a UV bean, and use of UV-beam curing is remarkably limited. Particularly, when the adhesion substrate has a large thickness or it contains additives such as a pigment having high covering power; i.e., it has low transparency to a UV beam, there is a problem that a UV beam does not reach the inner portion of a curing system, which therefore does not cure sufficiently. Consequently, using a photocurable adhesive for bonding of a polyolefin substrate has been difficult.

Moreover, there arise other problems, in that a light source of a UV beam such as a high-pressure mercury lamp is not necessarily inexpensive and that possible generation of ozone does not completely satisfy safety requirements.

OBJECT OF THE INVENTION

Therefore, an object of the present invention is, by providing photocurable adhesive composition usable in production of a resin layered material wherein a resin foam having a facing material and a resin substrate are adhered to each other and production method thereof, to overcome the above-described problems.

The present inventors have conducted earnest studies in order to solve the above-described problems, and have found that a photocurable adhesive that had never been used is employed in order to effect bonding between a resin foam layered on the backside of a facing material and a resin substrate, thereby solving the above-described problems. The present invention was accomplished based on this finding.

Accordingly, the present invention relates to a photocurable adhesive composition, to a resin layered material and to a production method thereof as following.

1) A photocurable adhesive composition comprising the following compounds as essential components: a chlorinated polyolefin (a); a compound having a polymerizable unsaturated group (b); and a photopolymerization initiator (c).

2) The photocurable adhesive composition described in 1) above which further contains a tackifier (d).

3) The photocurable adhesive composition described in 1) or 2) above, wherein the photopolymerization initiator has photosensitivity for visible light and/or near infrared light.

4) The photocurable adhesive composition described in any one of 1) to 3) above, wherein the photopolymerization initiator comprises a combination of a cationic dye represented by formula (1):

$$D^{+} \cdot A^{-} \quad (1)$$

(wherein $D^+$ represents a dye cation having photosensitivity in a visible light or near infrared light region and $A^-$ represents an anion); and a organic boron compound represented by formula (2):

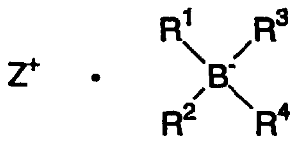 (2)

(wherein $Z^+$ represents an arbitrary cation; and each of $R^1$, $R^2$, $R^3$, and $R^4$ represents an alkyl group, an aryl group, an acyl group, an aralkyl group, an alkenyl group, an alkynyl group, a silyl group, a heterocyclic group, or a halogen atom).

5) The photocurable adhesive composition described in 4) above, wherein the dye cation ($D^+$) is a cation of polymethine compounds or triarylmethane compounds.

6) A resin layered material formed by bonding a resin substrate to another substrate using the photocurable adhesive composition described in any one of 1) to 5)above.

7) The resin layered material described in 6)above wherein the resin substrate is bonded to resin foam layered on the backside of the facing material.

8) The resin layered material described in 7)above, wherein the facing material is at least one member selected from the group consisting of vinyl chloride leather, olefin elastomer, and cloth.

9) The resin layered material described in any one of 6) to 8) above, wherein the resin substrate is a substrate main

component of which is a polyolefin polymer or vinyl chloride resin.

10) The resin layered material described in 9)above, wherein the resin substrate is a substrate main component of which is a propylene polymer.

11) The resin layered material described in 9)above, wherein the resin substrate formed of a propylene polymer is constituted by a composition comprising

a propylene polymer (e) not less than 60 wt% and
an inorganic filler (f) not more than 40 wt%.

12) The resin layered material described in 10)above, wherein the resin substrate formed of a propylene polymer is constituted by a composition comprising

a propylene polymer (e) 30-80 wt%,
an inorganic filler (f) 0-30 wt%,
a modified propylene polymer (e') 5-50 wt%, and
an oligomer terminated with a functional group (g) 0.5-20 wt%.

13) The resin layered material described in 12)above, wherein the modified propylene polymer is obtained by modifying a propylene polymer with an unsaturated compound having at least one functional group selected from the group consisting of a hydroxyl group, a carboxyl group, an amino group, and an epoxy group.

14) The resin layered material described in any one of 6) to 10)above, wherein the resin substarte is formed of an ethylene-α-olefin copolymer.

15) The resin layered material described in 14)above, wherein the ethylene-α-olefin copolymer is an ethylene-propylene copolymer.

16) The resin layered material described in any one of 7) to 15)above, which is constructed by bonding the surface of the resin substrate and the surface of the resin foam layered on the backside of the facing material using the photocurable adhesive composition described in any one of 1) to 5) above wherein both or either one of the surfaces are not subjected to a primer treatment.

17) The production method for a resin layered material described in any one of 7) to 16) comprising coating the photocurable adhesive composition described in any one of 1) to 5) above on the surface of the resin foam layered on the backside of the facing material and/or the surface of the resin substrate; bonding of the two surfaces above; and curing the adhesive layer through light irradiation.

DETAILED DESCRIPTION OF THE INVENTION

The present invention will next be described in detail.

The photocurable adhesive composition of the present invention contains as an essential components, a chlorinated polyolefin compound (a); a compound having a polymerizable unsaturated group (b); and a photopolymerization initiator (c); if necessary or needed, further tackifier (d) is added.

First, the photopolymerization initiator (c) will be described.

As photopolymerization initiator (c), there is preferred a compound which has photosensitivity in a visible light and/or near infrared light region and which induces initiation of polymerization through an irradiation beam having a wavelength of the region.

In order to photocure an adhesive layer of the resin layered material of the present invention, there must be transmitted light having a wavelength which sensitizes the photopolymerization initiator to a photopolymerization adhesive layer through a resin substrate. However, since resin substrates generally absorb UV beams having a shorter wavelength, when conventionally known UV beam-curable adhesives are used light having a wavelength in a UV region that is required for activation of the photopolymerization initiator is absorbed or remarkably attenuated through the resin substrates. Thus, satisfactory photocuring of the adhesive layer is difficult. In contrast, visible light or near infrared light having a longer wavelength enables transmission of light having a wavelength that is required for sufficient activation of the photopolymerization initiator even through a resin substrate. Thus, photocuring of the adhesive layer is satisfactorily achieved.

Specific examples of usable photopolymerization initiators (c) include acylphosphine oxide compounds which are visible light-curable polymerization initiators, e.g., 2,4,6-trimethylbenzoyl diphenylphosphoine oxide, bis(2,6-dimethoxybenzoyl)-2,4,4-trimethylpentylphosphine oxide, bis(2,6-dichlorobenzoyl)phenylphosphine oxide, bis(2,6-dichlorobenzoyl)-2,5-dimethylphenylphosphine oxide, bis(2,4,6-trimethylbenzoyl)phenylphosphine oxide, etc.(as a product name, Lucirin TPO, product of BASF Co., Irgacure 1700, Irgacure 1800, Irgacure 819, Irgacure 1850,product of Ciba-Specialty Chemicals Co.); polymerization initiators of a thioxanthone compound; and polymerization initiators

of a titanocene compound (e.g., Irgacure 784, product of Ciba-Specialty Chemicals Co.). Preferable examples include a dye/boron-containing salt long wave length photopolymerization initiator comprising a combination of a cationic dye represented by formula (1) having photosensitivity in a visible light and/or near infrared light region:

$$D^{+} \cdot A^{-} \qquad (1)$$

(wherein $D^+$ represents a dye cation having photosensitivity in a visible light or near infrared light region and $A^-$ represents an anion); and a boron compound represented by formula (2):

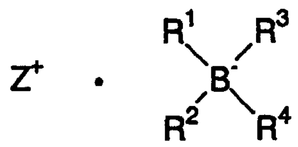

(2)

(wherein $Z^+$ represents an arbitrary cation; and each of $R^1$, $R^2$, $R^3$, and $R^4$ represents an alkyl group, an aryl group, an acyl group, an aralkyl group, an alkenyl group, an alkynyl group, a silyl group, a heterocyclic group, or a halogen atom).

The above-described dye/boron-containing salt photopolymerization initiator which induces initiation of polymerization through an irradiation beam having a long wavelength is conventionally known in the fields of image-formation and coatings; however, it has not been known as an adhesive for producing resin layered materials.

Using a combination of the organic boron compound and a dye having a wavelength for photosensitization in the visible light or near infrared light region, The dye irradiated with light having a wavelength for photosensitization is excited, and electron transfer between the dye and the organic boron compound decolors the dye and induces generation of radicals, which initiate a polymerization of a polymerizable unsaturated compound (b). Differing from the conventionally known dye-sensitized photopolymerization, light absorption of the dye *per se* does not inhibit transmission of the irradiation and, moreover, the cured product is not colored by the dye, since decolor reaction of the dye irreversibly occurs in the photopolymerization of the present invention.

Accordingly, a counter ion of the dye cation having a wavelength for photosensitization in the visible light or near infrared light region used in the present invention may be a boron-containing anion; in contrast, a counter cation moiety of the organic boron compound must be a colorless cation which exhibits no absorption in the visible light region.

Examples of the aforementioned combination of cationic dye and organic boron compound include combinations described in Japanese Patent Application Laid-Open (*kokai*) Nos. 3-111402, 3-119003, 4-80204, 4-146905, 4-261405, 4-261406, 5-194619, 5-59110, etc.

Specific examples of the cationic dye [$D^+$] are shown in Table 1 and Table 2. Examples of the cationic dye [$D^+$], having photosensitivity in the wavelength region of 400 nm or more, include methines, polymethines, xanthenes, oxazines, thiazines, arylmethanes, and pyzyliums. Of these, cyanines as polymethine compounds; styryl compounds; and triarylmethane compounds are preferably used. Typically, polymethine compounds easily cause electron transfer to organic boron compounds, thus they easily cause reaction of the present invention; whereas triazylmethane compounds are preferred in that cured products are colored remarkably little after passage of time.

Table 1-1

| Number | Chemical structure | Wavelength at maximum absorption |
|---|---|---|
| 1 | 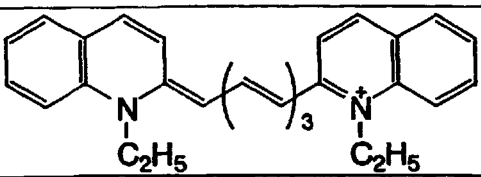 | 820nm |
| 2 | 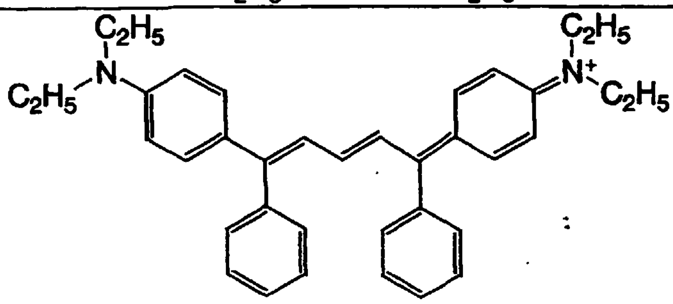 | 830nm |
| 3 | 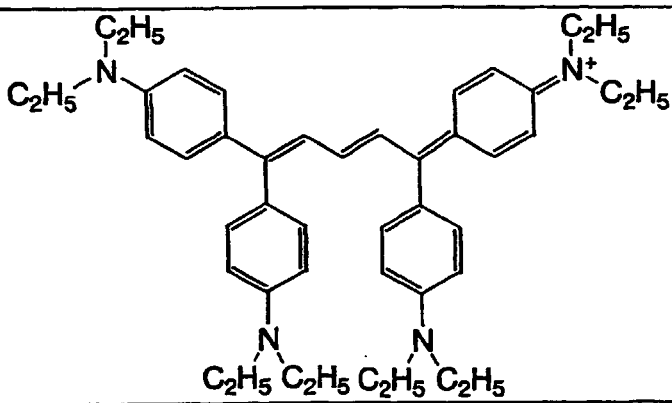 | 822nm |
| 4 | 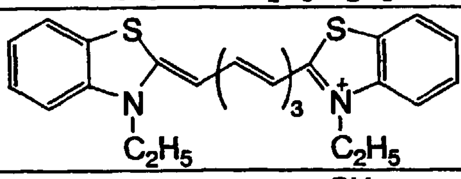 | 768nm |
| 5 | 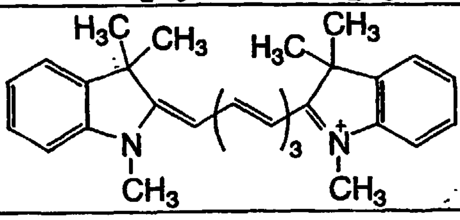 | 748nm |

**Table 1-2**

| Number | Chemical structure | Wavelength at maximum absorption |
|---|---|---|
| 6 | 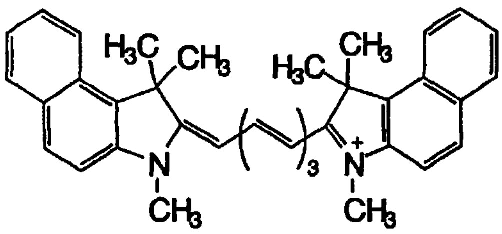 | 785nm |
| 7 | 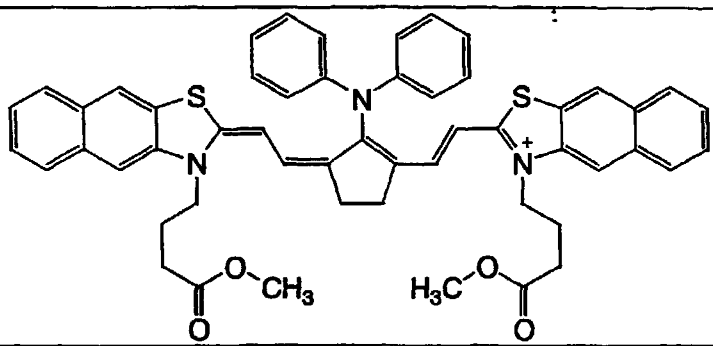 | 828nm |
| 8 | 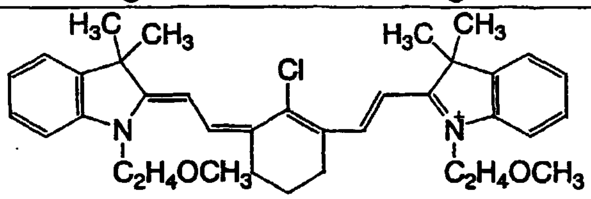 | 787nm |
| 9 | 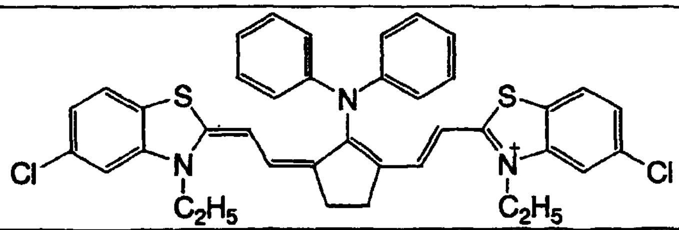 | 819nm |
| 10 | 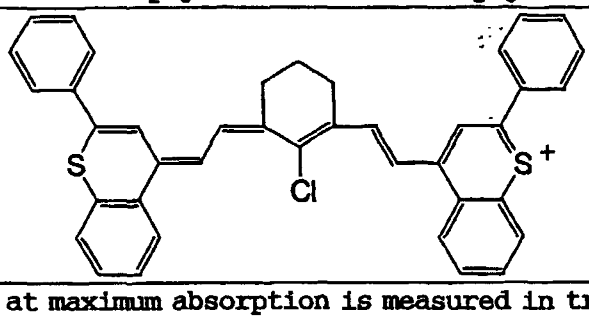 | 1080nm |

Wavelength at maximum absorption is measured in trimethylolpropane trimethacrylate.

## Table 2-1

| Number | Chemical structure | Wavelength at maximum absorption (Solvent) |
|---|---|---|
| 1 | 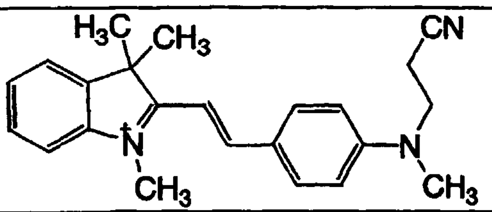 | 522nm (Acetonitrile) |
| 2 | 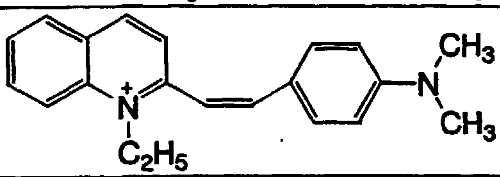 | 528nm (Acetonitrile) |
| 3 | 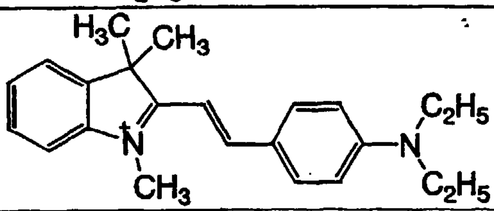 | 549nm (Acetonitrile) |
| 4 | 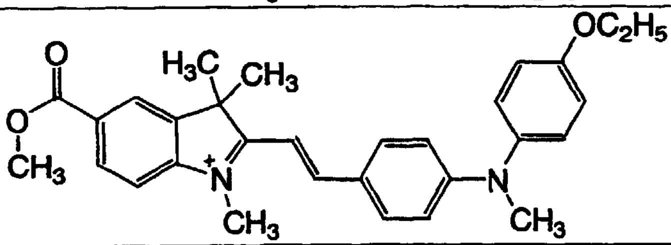 | 559nm (Acetonitrile) |
| 5 | 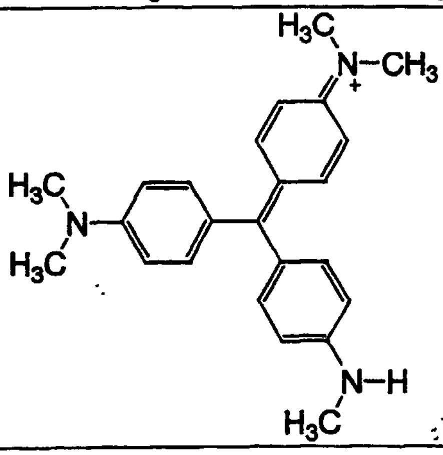 | 584nm (Acetonitrile) |

Table 2-2

| Number | Chemical structure | Wavelength at maximum absorption (Solvent) |
|---|---|---|
| 6 | 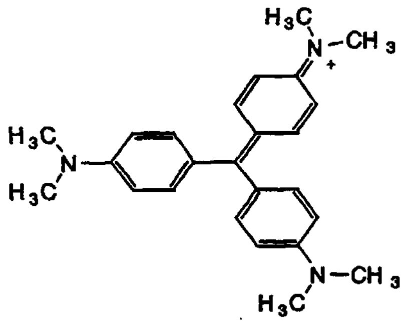 | 589nm (Acetonitrile) |
| 7 | 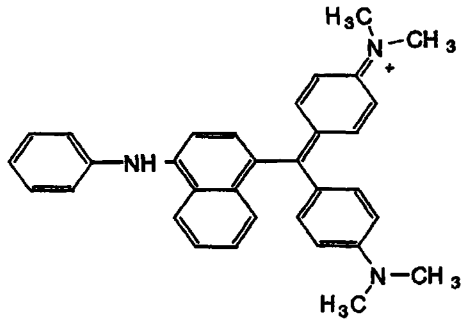 | 613nm (Acetonitrile) |
| 8 | 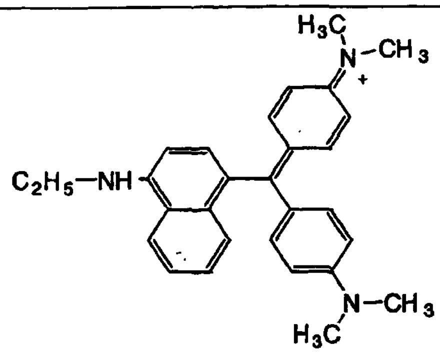 | 615nm (Acetonitrile) |
| 9 | 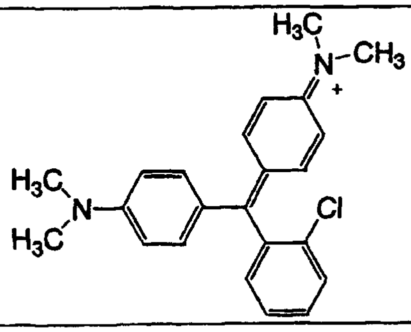 | 632nm (Acetonitrile) |

Examples of A⁻, which is a counter anion of the cationic dye represented by formula (1), include p-toluenesulfonate ion, an organic carboxylate ion, a perchlorate ion, a halide ion, and a tetracoordinated borate anion repre-

sented by formula (3):

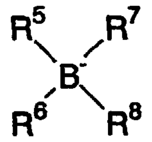

(3)

(wherein each of $R^5$, $R^6$, $R^7$, and $R^8$ represents an alkyl group, an aryl group, an acyl group, an aralkyl group, an alkenyl group, an alkynyl group, a silyl group, a heterocyclic group, or a halogen atom).

Examples of the tetracoordinated borate anion, which is a counter anion of the organic boron compound represented by formula (2), include n-butyltriphenylborate ion, n-octyltriphenylborate ion, triphenylsilyl-triphenylborate ion, n-butyltrianisylborate ion, n-butyltri(p-fluorophenyl)borate ion, n-butyltri (p-trifluoromethylphenyl)borate ion, di-n-dodecyldiphenylborate ion, tetraphenylborate ion, triphenylnaphthylborate ion, tetrabutylborate ion, and tri-n-butyl(dimethylphenylsilyl)borate ion.

Examples of the cation ($Z^+$) shown in formula (2) include a guaternary ammonium cation; a quaternary pyridinium cation; a guaternary quinolinium cation; a diazonium cation; a tetrazolium cation; a phosphonium cation; an (oxo)sulfonium cation; metal cations such as a cation of sodium, potassium, lithium, magnesium, or calcium; an organic oxygen cation such as flavylium or pyranium; a carbon cation such as tropylium or cyclopropylium; a halogenium cation such as iodonium; and a cation of a compound containing a metal such as arsenic, cobalt, palladium, chromium, titanium, tin, or antimony. In the present invention, a cation described in Japanese Patent Application Laid-Open (*kokai*) No. 6-75374 may be used. These cationic dyes and boron-containing catalysts may be used singly or in combination of two or more species.

In the present invention the organic boron compound and near infrared light- or visible light-absorbing cationic dye compound are contained in a compositional ratio of 1/5 - 1/0.01, preferably 1/1 - 1/0.1. Generally, the organic boron compound is preferably used in an amount more than that of the cationic dye in view of decoloration reaction of the dye and efficiency of radical generation.

These photopolymerization initiators (c) are used in an amount of 0.01-20 parts by weight based on 100 parts of the polymerizable unsaturated compound (b) of the present invention, preferably 0.05-15 parts by weight. When the amount of photopolymerization initiator is less than 0.01 part by weight, photocuring does not sufficiently proceed, whereas when it is used in an excess amount, the situation is economically disadvantageous and the strength and durability of the adhesive layer are sometimes poor.

The polymerizable unsaturated compound (b) of the present invention contained in photocurable adhesives is a compound which produces a polymer compound through radical polymerization. Examples include resins such as an unsaturated polyester resin, an epoxy (meth)acrylate resin (vinyl ester resin), a urethane (meth)acrylate compound, or a polyester (meth)acrylate compound; oligomers; (meth)acrylic compounds such as a (meth)acrylic acid ester or a (meth)acrylamide; and vinyl compounds such as styrene or a carboxylic acid vinyl ester. Specific example is compounds described in Japanese Patent Application Laid-Open (*kokai*) No. 6-75374.

The polymerizable unsaturated compound (b) is used in order to maintain and enhance properties such as adhesion performance or durability of the adhesion layer, and is typically added in an amount of 5-500 parts by weight based on 100 parts of a chlorinated polyolefin compound serving as a component of the photocurable adhesive of the present invention, preferably 10-200 parts by weight. When the amount is too small, the above properties might be poor. In contrast, when the amount is too large adhesion performance attributed to the chlorinated polyolefin disadvantageously decreases.

The chlorinated polyolefin compound (a) of the present invention contained in photocurable adhesives is a component which enhances adhesion to a substrate made of a resin such as a polyolefin resin. No particular limitation is imposed on the chlorinated polyolefin compound obtained through whichever methods so long as it can provide adhesion to the resin substrate. Typically, there may be used photocurable adhesives containing chlorine in an amount of 5-60 wt%, preferably 15-45 wt%. When the chlorine content is too low, formation of the solution at low temperature is difficult, whereas when it is too high, adhesion to the resin substrate or facing material decreases.

Specific examples of the chlorinated polyolefin (a) include compounds that are reaction products of chlorine with polyolefins such as crystalline polypropylene, non-crystalline polypropylene, polybutene-1, low-density polyethylene, high-density polyethylene, ethylene-propylene copolymers, ethylene-propylene-diene copolymers, and ethylene-vinyl acetate copolymers; or compounds which are reaction products of chlorine with these polyolefins to which a hydroxyl group or carboxyl group has been introduced.

The above-described chlorinated polyolefins are produced through conventionally known methods, e.g., a method including dissolving the above-described polyolefins in a chlorinating solvent such as carbon tetrachloride or forming an aqueous suspension thereof and causing the solution or suspension to react with chlorine gas at room temperature or below 120°C with or without pressure, in the presence or absence of a catalyst. Instead of the catalyst, UV irradiation may be employed to produce the chlorinated polyolefin.

Chlorinated polyolefins which are modified through a variety of methods may be used as the chlorinated polyolefin (a) of the present invention. Briefly, affinity thereof to a polymerizable compound contained in the composition of the present invention and adhesion performance thereof might increase through modifications such as acryl-modification or carboxylic acid-modification. These modified chlorinated polyolefins may easily be obtained through conventionally known methods. For example, acryl-modified chlorinated polyolefins may be produced through the following methods:

a method including dissolving the above chlorinated polyolefin in any of a variety of solvents such as aromatics, alcohols, and ketones; adding radical polymerization initiators such as peroxides and azobis compounds; heating; and gradually adding (meth)acrylic compounds such as (meth)acrylic acid esters dropwise to the reaction mixture to graft-polymerize; a method including mixing the chlorinated polyolefin and the above (meth)acrylic compounds, adding polymerization initiators, and heating to graft-modify; and a method including acryl-modifying the polyolefin in accordance with the above-described method and chlorinating through the above-described methods.

In a similar manner, carboxylic acid-modified chlorinated polyolefins may be produced through the following methods:

a method including dissolving the above chlorinated polyolefin in any of a variety of solvents; adding radical polymerization initiators such as peroxides and azobis compounds; heating; and gradually adding $\alpha,\beta$-unsaturated carboxylic acids such as (meth)acrylic acid, maleic acid (anhydride), or fumaric acid or anhydrides thereof dropwise to the reaction mixture to graft-polymerize; a method including mixing the chlorinated polyolefin and the above $\alpha,\beta$-unsaturated carboxylic acids, adding polymerization initiators, and heating to graft-modify; and a method including carboxylic acid-modifying the polyolefin in accordance with the above-described method and chlorinating through the above-described methods.

Specific examples of the above-described chlorinated polyolefins include the following olefins:

(1) Unmodified chlorinated polypropylenes

Product name : Superchlon 773H, 803L, 814H, and 803MW, (products of Nippon Paper Industries, Co., Ltd.),
Product name : Hardlen 13LB, 14-LLB, 15LPB, 17-L, and 35-A, (products of Toyo Kasei Kogyo)

(2) Unmodified chlorinated polyethylenes

Product name : Superchlon S-309 (product of Nippon Paper Industries, Co., Ltd.)
Product name : Elaslen 303A, 303B, 352FA, 404B, 402NA, 303C, and 452NA (products of SHOWA DENKO K.K.)

(3) Unmodified chlorinated polyethylene-vinyl acetate copolymer

Product name : Superchlon B (product of Nippon Paper Industries, Co., Ltd.)

(4) Acryl-modified chlorinated polypropylenes

Product name : Superchlon 214, 224H, and S-699 (products of Nippon Paper Industries, Co., Ltd.)
Product name : Hardlen B-13, B-2000, and B-4000 (products of Toyo Kasei Kogyo)

(5) Carboxylic acid-modified chlorinated polypropylenes

Product name : Superchlon 822, 892L, and 842LM (products of Nippon Paper Industries, Co., Ltd.)
Product name : Hardlen 13-MLJ, 14-MLJ, and CY-9122P (products of Toyo Kasei Kogyo.)

In the photocurable adhesive composition of the present invention, chlorinated polyolefin compounds having a high softening temperature are preferably used in order to obtain excellent adhesion performance at high temperature. Preferably, there are used polyolefin compounds having a softening temperature of 50°C or more, more preferably 70°C or more.

The resin substrates which are used for a resin layered material produced by photocurable adhesive composition in the present invention are formed of polyolefins such as polyethylene, polypropylene, polybutene-1, α-olefin-ethylene copolymers (e.g., ethylene-propylene copolymers), ethylene-propylene-diene copolymers, and ethylene vinyl acetate copolymers; vinyl chloride resins; etc. A resin substrate obtained from a composition predominantly formed of a propylene polymer (e) is preferred. The below-described inorganic fillers (f) are optionally incorporated thereto in an amount of preferably 40 wt% or less.

More preferred is a resin substrate obtained from a composition comprising a propylene polymer (e), a modified propylene polymer (e'), an inorganic filler (f), and an oligomer having a terminal functional group (g). The modified propylene polymer (e') is a propylene polymer (e) which is modified with an unsaturated compound having at least one functional group selected from a hydroxyl group, a carboxyl group, an amino group, and an epoxy group.

Examples of the oligomer having a terminal functional group (g) include a hydroxy-terminated 1,4-polybutadiene and amino-terminated butadiene-nitrile rubber.

These components are preferably incorporated in the following amounts: 30-80 wt% of a propylene polymer (e), 0-30 wt% of an inorganic filler (f), 5-50 wt% of a modified propylene polymer (e'), and 0.5-20 wt% of an oligomer having a terminal functional group (g). Examples of the propylene polymer in the present description include a propylene homopolymer and a block or random copolymer of ethylene, and/or α-olefin predominantly comprising propylene. These polymers may be used singly or in combination.

To the propylene polymer, ethylene-propylene copolymer rubber may be added in an amount such that the mechanical properties thereof are not deteriorated. The rubber is added typically in an amount of 40 wt% or less.

The resin substrate composition used in the present invention may be produced through a method typically employed in the field of synthetic resins. Examples of methods for mixing include dry-blending by use of a mixer such as a Henschel mixer and melt-kneading by use of a mixer such as a roll-mill, a screw type extruder, a kneader, or a Bumbury mixer. In the production, a more homogeneously mixed composition may be obtained by dry-blending components of the composition in advance and further melt-kneading the formed mixture. When molded products are produced, the composition is preferably formed into pellets, in view of ease of handling.

The resin substrates of the present invention may be molded into a desired shape in advance through a method typically employed in the field of thermoplastic resins such as injection molding, press-molding, or extruding.

To the resin substrate composition, inorganic fillers (f) which are broadly used in the field of typical synthetic resins and rubber industry in order to impart rigidity and heat resistance are preferably incorporated in an amount such that they do not impede optical transparency required for photocuring a photocurable adhesive.

Examples of the inorganic fillers (f) include oxides, hydrates thereof (hydroxides), sulfates, carbonates, and silicates of a metal such as aluminum, copper, iron, lead, nickel, magnesium, calcium, barium, zinc, zirconium, molybdenum, silicon, antimony, or titanium; double salts thereof, and mixtures thereof.

Among these fillers, a powder filler having a grain size of 30 μm or less is preferred, and a powder filler having a grain size of 10 μm or less is more preferred. A fibrous filler having a fiber radius of 0.1-0.2 μm and a length of 1.0-150 μm is preferred. Furthermore, a tabular filler having a length of 30 μm or less is preferred. Among these fillers, talc, mica, clay, wollastonite, potassium titanate, calcium carbonate, etc. are particularly preferred.

To the above-described resin substrate composition, there may be added additives typically used in the field of polyolefin resins, particularly polypropylene resins, such as UV-absorbers, antioxidants, stabilizers for weather resistance, plasticizers, lubricants, antistatic agents, and coloring agents (e.g., dyes, pigments).

Incorporation of fillers and additives which hampers transmission of the above-described light, particularly UV light having a short wavelength, to resins substrate composition into photocurable adhesives containing a conventionally known UV-polymerization initiator has been difficult. However, use of the photocurable adhesives of the present invention containing a photopolymerization initiator corresponding to a longer wavelength enables use of a variety of fillers and additives.

Resin compositions must be melt-mixed or melt-molded at a temperature higher than the melting point of a thermoplastic resin used. However, when the temperature is excessively high, the thermoplastic resin might thermally

decompose. Thus, melt-kneading temperature and molding temperature typically lie in the range between 180°C and 300°C, preferably between 180°C and 280°C. The optimum value may vary depending on the type and compositional ratio of the materials.

Typical examples of the facing material which is a constitutional component of resin layered materials having a facing material and foam used in the present invention include vinyl chloride leather and olefin elastomer (TPO) leather. Cloth may also be used.

The facing materials comprising vinyl chloride or an olefin elastomer is so-called leather, which is obtained by molding typically used soft vinyl chloride resins or olefin elastomers into a sheet-like shape through calendering or by use of a die-extruder. Preferably, the leather has a thickness of 0.2-1.5 mm and surface hardness (Shore A hardness) of 25-60. A resin foam is laminated on the backside of these facing materials typically by use of an adhesive of a polyester type, a urethane type, etc.

Cloth used as the facing materials is woven fabric or non-woven fabric, which may be further layered on the backside with another woven fabric, non-woven fabric, thermoplastic resin, an elastomer sheet, a film, etc.

Typical examples of the resin foam which is used on the backside of the facing material include polypropylene foams, polyethylene foams, and polyurethane foams. preferably, these foams have an expansion ratio of 15-40 and a thickness of 1.5-5 mm.

In the present invention, near infrared light indicates a beam having a wavelength range of 780-1200 nm, visible light indicates a beam having a wavelength range of 380-780 nm, and UV light indicates a beam a wavelength range of less than 380 nm.

Any light source may be used to cure the photocurable adhesives for the resin layered materials of the present invention so long as it has wavelength or spectral distribution corresponding to the photosensitive wavelength region of the photopolymerization initiator to be used. Examples of the light sources which may be used include near infrared lamps, sodium lamps, xenon lamps, halogen lamps, fluorescent lamps, incandescent lamps, solar lamps, metal halide lamps, high-pressure mercury laps, and ultrahigh-pressure mercury lamps.

The irradiation time of the lamps for curing the adhesive layer may be varied in accordance with conditions, such as an effective wavelength region and output power of the light source, irradiation distance, types of resin substrates, thickness, optical transparency, or composition of the adhesive layer. However, conditions may be selected so that the irradiation time may be five seconds or more, preferably one minute or more.

When a resin substrate and a resin foam laminated on the facing material surface are bonded to each other by use of an adhesive during production of the resin layered materials of the present invention, the substrate and the facing material might generate a slippage due to some reason until the adhesion layer is cured to develop adhesion performance. In order to prevent the slippage, a variety of tackifiers may be added.

No limitation is imposed on the tackifiers (d) so long as they have affinity to the chlorinated polyolefins and polymerizable unsaturated compounds of the present invention; exhibit tackiness after a substrate to be bonded is coated with the composition; and provide no adverse effect on adhesion performance after adhesion through photocuring; and, specifically, rubber components and tackifying resins may be used.

Examples of the rubber components include chloroprene rubber (e.g., product name, neoprene GRT, GS, WRT, SND-8, AF, AG, AD, WHV, ADG-10, ADG-20, AGD-30, and WD, (products of Showa Denko-du Pont Ltd.)); styrene-butadiene rubber (e.g., product name TR 2000 and TR 2827, (products of Japan Synthetic Rubber Co., Ltd.); ZEOFIT 1000P, (product of Nippon Zeon Co., Ltd.); and Tanprene 125, Solprene T-414, and Asaprene T-420, (products of Asahi Chemical Industry Co., Ltd.)); and styrene-isoprene rubber (e.g., Quintack 3530, 3433, and BM-302, (products of Nippon Zeon Co., Ltd). and SIS 5002, (product of Japan Synthetic Rubber Co., Ltd.)).

Examples of the tackifying resins include coumarone-indene-styrene resins (e.g., product name Eschrone G-90, GN-100, and GV-120, (products of Nippon Steel Chemical Co., Ltd.)); terpene hydrocarbon resins (e.g., YS Resin PX1250, Clearone P-125, YS Holistar 2115, and YS Resin TO-125, (products of Yasuhara Chemical Co., Ltd.)); and phenolic resins (e.g., product name CKM1737, (products of Showa Highpolymer Co., Ltd.)).

Above described rubber components, if necessary, can be blended and kneaded with antioxidants, magnesium oxide, zinc white(zinc oxide) prior to use. And tackifying resins can also be stirred and blended with magnesium oxide etc. prior to use.

The tackifiers (d) used in the present invention can be added as a single state of rubber components or tackifying resins to the component. Or it can be added as a mixed state. A method to use these tackifiers (d) is described in "Secchaku Dai-hyakka" ("Handbook of adhesives") (Mizumachi et al, Asakura Shoten, 206-211, 1993).

When tackifiers (d) are used in the present invention, the addition amount is predetermined in consideration of development of adhesion performance, curability, adhesion performance, and other factors. They are typically added in an amount of 1-500 parts by weight (solid content) based on 100 parts by weight (solid content) of the chlorinated polyolefin compound (a) of the present invention, preferably 5-200 parts by weight (solid content). When the amount is extremely low, desired tackiness is not realized, whereas when the amount is excessively high, adverse effects on adhesion performance or durability of the adhesion layer may result.

The solid content of the photocurable adhesive component of the present invention can be adjusted freely depending on the way of application(brushing and spraying). If the above described chlorinated polyolefin compound (a) and/or tackifiers (d) are in solid state, the concentration thereof can be adjusted when they are dissolved in an organic solvent. Or it can be diluted with an additional organic solvent just before they are used as an adhesive component. And when commercial chlorinated polyolefin compound is used which is already dissolved in an organic solvent, additional organic solvent can be used for producing an adhesive composition, or organic solvent can be added to dilute the adhesive composition just before use. Any organic solvent can be used as long as they are substantially inactive to adhesive component. For example, hydrocarbons such as benzene, toluene, xylene, cyclohexane, hexane, esters such as ethyl acetate, butyl acetate, ketones such as acetone, methyl ethyl ketone, cyclohexanone, ethers such as tetrahydrofuran, 1,4-dioxane, chlorinated hydrocarbons such as chloroform, dichloromethane, chlorobenzene can be used.

The resin layered materials of the present invention may be produced by applying an adhesive to the resin foam surface of a layered material comprising a facing material and a resin foam and/or to the surface of a resin substrate; bonding both surfaces; and curing by irradiation with light.

The resin layered materials of the present invention may be produced by use of safe, inexpensive equipment for a short time at low temperature (normal temperature) by use of a photocurable adhesive in the adhesion layer. Furthermore, the resin layered materials provide significant advantages in that there may be eliminated physical and chemical treatment of the adhesion substrate such as corona discharge, plasma treatment, gas flame treatment, and chemical treatment or primer treatment, by incorporation of a chlorinated polyolefin compound into the adhesion layer.

## BEST MODE FOR CARRYING OUT THE INVENTION

The present invention will next be described by way of examples, which should not be construed as limiting the invention thereto. As used herein, the word part(s) mans part(s) by weight, and % means weight %.

The physical properties of the thermoplastic resin compositions and inorganic fillers contained in the facing materials or the substrates used in the following Examples and Comparative Examples are described below.

### Facing material

Vinyl chloride leather (1): This is a vinyl chloride leather facing material including a surface vinyl chloride leather layer having a thickness of 0.5 mm and a Shore A hardness of 40 and a foamed resin, polypropylene foam, having a thickness of 2.5 mm and a expansion ratio of 35.

Vinyl chloride leather (2): This is a vinyl chloride leather facing material including a surface vinyl chloride leather layer having a thickness of 0.7 mm and a Shore A hardness of 50 and a foamed resin, polyurethane foam, having a thickness of 3.0 mm and a expansion ratio of 30.

TPO leather: This is a TPO leather facing material including a surface TPO leather layer having a thickness of 0.5 mm and a Shore A hardness of 50 and a foamed resin, polyurethane foam, having a thickness of 2.5 mm and a expansion ratio of 30.

### Propylene polymer (PP)

PP-1: A propylene/ethylene block copolymer having a melt-flow rate (MFR) of 20 g/10 min, and an ethylene content of 6.0%.

PP-2: A propylene homopolymer having an MFR of 20 g/10 min.

PP-3: A propylene/ethylene random copolymer having an MFR of 17 g/10 min, and an ethylene content of 3.1%.

### Modified propylene polymer (Modified resin)

Modified resin-1: A propylene homopolymer (100 parts) having an MFR of 0.5 g/10 min, 2,5-dimethyl-2,5-di-tert-butyl-peroxyhexane (0.011 parts), and maleic anhydride (0.375 parts) were added to a Henschel mixer and dry-blended for five minutes. The resultant mixture was supplied to a non-vent-type extruder (∅ 40 mm) equipped with a full flight screw, and kneaded while the mixture was melted within a temperature range of 220-240°C, to thereby obtain a modified propylene resin.

Modified resin-2: The same type of propylene homopolymer (100 parts) as used in modified resin-1, benzoyl peroxide (0.05 parts), and glycidyl methacrylate (5 parts) were added to a Henschel mixer and dry-blended for five minutes. The resultant mixture was supplied to the above-mentioned extruder, and kneaded while the mixture was melted within a temperature range of 170-190°C, to thereby obtain a modified propylene resin.

Modified resin-3: The above propylene homopolymer (85 parts) as used in modified resin-1, ethylene/propylene copolymer rubber having a Mooney viscosity of 20 (15 parts), bis(tert-butylperoxyisopropyl)-benzene (5 parts), and 2-hydroxyethyl methacrylate (4 parts) were added to a Henschel mixer and dry-blended for five minutes. The resultant mixture was kneaded with an extruder while the mixture was melted within a temperature range of 170-200°C, to thereby obtain a modified propylene resin.

Modified resin-4: The above propylene homopolymer (85 parts) as used in modified resin-1, ethylene/propylene copolymer rubber having a Mooney viscosity of 20 (15 part), dicumyl peroxide (1 part), and N,N-dimethylaminoethyl methacrylate (5 parts) were added to a Henschel mixer and dry-blended for five minutes. The resultant mixture was kneaded with an extruder while the mixture was melted within a temperature range of 165-200°C, to thereby obtain a modified propylene resin.

Oligomer having a terminal functional group

Oligomer-1: A waxy hydrogenated both-end-hydroxy-terminated 1,4-polybutadine (1,4-bonds: 80%, number average molecular weight: 2800, iodine value: 1.5, average number of hydroxyl groups: 2.3/molecule).

Oligomer-2: A both-end-amino-terminated butadiene-nitrile rubber (acrylonitrile content: 16.5%, number average molecular weight: 4000, iodine value: 330, amine equivalents: 900).

Inorganic filler

Talc: A talc having an average grain size of 2.0 μm and an aspect ratio of 5.0.

Calcium carbonate: A light calcium carbonate having an average grain size of 0.5 μm.

Mica: A mica having an average longer grain size of 5.0 μm.

Production of a resin substrate

Polymers having a type and a feed ratio shown in Table 3 and an inorganic filler were dry-blended for five minutes in advance with a Henschel mixer. The resultant mixture was melt-kneaded at a resin temperature of 200°C by use of a vent-type twin screw extruder (∅ 30 mm), to thereby obtain pellets of each composition. The resultant pellets were molded into tabular moldings A~G (thickness 2mm, 140 mm × 140 mm) by use of a 5-oz-injection molding machine. The thus obtained moldings were appropriately cut to provide substrate used for layered materials.

Table 3

| Number | PP | | Modified resin | | Oligomer | | Inorganic filler | | Abbreviation of a resin substrate |
|---|---|---|---|---|---|---|---|---|---|
| | Type | Content | Type | Content | Type | Content | Type | Content | |
| 1 | 1 | 87% | - | - | - | - | Talc | 13% | A |
| 2 | 1 | 55% | 1 | 20% | 1 | 5% | Talc | 20% | B |
| 3 | 1 | 42% | 2 | 35% | 2 | 3% | Talc | 20% | C |
| 4 | 1 | 55% | 3 | 15% | 1 | 10% | Cal[1)] | 20% | D |
| 5 | 2 | 100% | - | - | - | - | - | - | E |
| 6 | 2 | 60% | 4 | 20% | 1 | 10% | Talc | 10% | F |
| 7 | 3 | 53% | 3 | 20% | 1 | 12% | Mica | 15% | G |

1) Cal means calcium carbonate.

Evaluation of layered material test pieces

Bending strength measurement: The test pieces of layered material were cut to a width of 12.7 mm and a length of 127 mm, and subjected to measurement in accordance with ASTM D790.
Falling weight impact test: In a 20°C thermostatic chamber, a test piece was placed horizontally on a hollow cylindrical jig having a diameter of 50 mm (wall thickness of the hollow cylinder: 2 mm). A 3 kg weight having a radius of 1/2 inches at the ends was dropped freely from a predetermined height above the center of the cylinder on which the test piece was placed. The minimum height that resulted in breakage of the test piece was used to calculate the breaking strength (weight x height).
Adhesion creep test: A portion of resin foam having a facing material thereon was made to adhere to a substrate, and the portion of facing material that had not been adhered was bent at 90°. A 200 g ball was suspended from the end portion, and the test piece was allowed to stand for 24 hours at 80°C. Thereafter, evaluation was made by the extent to which peeling occurred.
Room temperature adhesion test: One-half the length of the facing material was forcibly peeled from the resin substrate of each test piece of layered material. Subsequently, the remaining adhesion portion was pulled in the reverse direction (180°) with respect to the sheet at a rate of 200 mm/min, whereby the peeling strength was measured. In addition, the broken portion was visually observed.
Thermal adhesion resistance test: A layered test piece was left in a 80°C thermostatic chamber for 300 hours. Thereafter, the test piece was pulled at 80°C in a manner similar to that employed in the aforementioned room temperature adhesion test, to thereby obtain the peeling strength.
Layered materials which break at heavier loads in the adhesion test are preferred. Moreover, upon breakage, those causing material breakage of the resin foam having a facing material of weak strength as a substrate are preferred, since this indicates a strong adhesive layer and excellent adhesion against the substrate material.

Example 1

An adhesive composition was prepared by mixing chlorinated polypropylene (Superchlon 892L, product of Nippon Paper Industries, Co., Ltd.) (300 parts), dicyclopentenyl acrylate (FA511A, product of Hitachi Chemical Co., Ltd.) (18 parts), a dye specified in No. 3 of Table 1 (counter ion; p-toluenesulfonate anion, product of SHOWA DENKO K.K.: hereinafter abbreviated as IRT) (0.3 parts), tetra-n-butylammonium n-butyltriphenylborate (product of SHOWA DENKO K.K.: hereinafter abbreviated as P3B) (1.2 parts), and acryloyl morpholine (product of Kohjin Co.) (11 parts).
This composition was applied to a polypropylene test piece shown in Table 3 (resin substrate A) such that the coating amount (liquid content) became 150 g/m$^2$, and the test piece was dried at 80°C for two minutes and allowed to cool at room temperature for five minutes. Polypropylene foam having polyvinyl chloride (product of Toray Co.: hereinafter abbreviated as PPF) on one side thereof (vinyl chloride leather (1)) was heated to 120°C, and the polypropylene foam layer was bonded to the adhesive face of resin substrate A at a pressure of 1 kg/cm$^2$. The resultant adhered layered material was irradiated from a distance of 10 cm on the PP material side with light from an infrared lamp (IR 100V 375W RHE: Toshiba Lighting & Technology Corporation) for two minutes. Thus, the bending strength, falling weight impact strength, adhesion creep, room temperature adhesion, and thermal adhesion resistance of the thus-obtained layered test piece were evaluated. The results are shown in Table 4.

Example 2

The procedure of Example 1 was performed, except that neoprene WRT elastomer (products of Showa Denko-du Pont Ltd.; 20% solid content as a toluene solution ) (50 parts) which was pretreated with MgO and ZnO in toluene, was added as a tackifier to the adhesive composition of Example 1. PPF was presurized to be bonded to the resin substrate coated with the adhesive. When the resin substrate was tried to be peeled off from the PPF by both hands, material breakage of the PPF occured, due to development of initial adhesion performance. Another sample of the adhered layered material prepared by this procedure was irradiated for two minutes from a distance of 10 cm on the PP substrate side with light from the above-mentioned lamp for curing purposes.
The bending strength, falling weight impact strength, adhesion creep, room temperature adhesion, and thermal adhesion resistance of the thus-obtained layered test piece were evaluated. The results are shown in Table 4.

Examples 3 to 8

The procedure of Example 1 was performed by use of the same type of adhesive and under the same conditions, except that a resin substrate and a facing material were alternated. The evaluation results are shown in Table 4.

Table 4

| Example | Material to be used | | Bending strength kg/cm$^2$ | Falling weight impact strength kg-cm | Room temperature adhesion kg/25mm width | Thermal adhesion resistance kg/25mm width |
|---|---|---|---|---|---|---|
| | Facing material | Substrate | | | | |
| 1 | VC(1)[1)] | A | 330 | 165 | Breakage[2)] | Breakage[2)] |
| 2 | VC(1)[1)] | A | 330 | 165 | Breakage[2)] | Breakage[2)] |
| 3 | VC(1)[1)] | B | 340 | 180 | Breakage[2)] | Breakage[2)] |
| 4 | VC(2)[1)] | C | 355 | 150 | Breakage[2)] | Breakage[2)] |
| 5 | TPO leather | D | 305 | 200 | Breakage[2)] | Breakage[2)] |
| 6 | VC(1)[1)] | E | 270 | 155 | Breakage[2)] | Breakage[2)] |
| 7 | TPO leather | F | 280 | 190 | Breakage[2)] | Breakage[2)] |
| 8 | TPO leather | G | 310 | 130 | Breakage[2)] | Breakage[2)] |

1) VC means vinyl chloride leather.
2) Material breakage

Example 9

The procedure of Example 1 was performed by use of a equipart of a dye specified in No. 3 of Table 2 (counter ion; chloride anion, hereinafter abbreviated as BV7) instead of IRT. The adhesion creep test of the layered material showed 0 mm peeling after the material was allowed to stand for 24 hours. Both the room temperature adhesion test and thermal adhesion resistance test showed material breakage as in the case of Example 1.

Example 10

The procedure of Example 1 was performed by use of dicyclopentenyl acrylate (9 parts) and dimethyloltricyclodecane acrylate (Light Acrylate DCP-A, product of Kyoei-sha Chemical Co., Ltd.) (9 parts) instead of dicyclopentenyl acrylate (18 parts).

The adhesion creep test of the layered material showed 0 mm peeling after the material was allowed to stand for 24 hours. Both the room temperature adhesion test and thermal adhesion resistance test showed material breakage as in the case of Example 1.

Example 11

The procedure at Example 1 was performed by use of BV7 instead of IRT used in example 1 and by use of dicyclopentenyl acrylate (9 parts) and a urethane acrylate oligomer (UA306H, product of Kyoei-sha Chemical Co., Ltd.) (9 parts) instead of dicyclopentenyl acrylate (18 parts). The adhesion creep test of the layered material showed 0 mm peeling after the material was allowed to stand for 24 hours. Both the room temperature adhesion test and thermal adhesion resistance test showed material breakage as in the case of Example 1.

Example 12

The procedure of Example 1 was performed by use of dicyclopentenyl acrylate (9 parts) and dipentaerythritol hexaacrylate (DPE-6A, product of Kyoei-sha Chemical Co., Ltd.) (9 parts) instead of dicyclopentenyl acrylate (18 parts) used in example 1. The adhesion creep test of the layered material showed 0 mm peeling after the material was allowed to stand for 24 hours. Both the room temperature adhesion test and thermal adhesion resistance test showed material breakage as in the case of Example 1.

Example 13

The procedure of Example 1 was performed by use of Superchlon 892L (200 parts) and Superchlon 842LM

(100 parts) (product of Nippon Paper Industries, Co., Ltd.) instead of chlorinated polypropylene (Superchlon 892L), (300 parts) used in example 1. The adhesion creep test of the layered material showed 0 mm peeling after the material was allowed to stand for 24 hours. Both the room temperature adhesion test and thermal adhesion resistance test showed material breakage as in the case of Example 1.

Example 14

The procedure of Example 1 was performed by use of Superchlon 892L (200 parts) and Superchlon 842LM (100 parts) instead of chlorinated polypropylene (Superchlon 892L) (300 parts) used in example 1 and by use of an equipart of BV7 instead of IRT. The adhesion creep test of the layered material showed 0 mm peeling after the material was allowed to stand for 24 hours. Both the room temperature adhesion test and thermal adhesion resistance test showed material breakage as in the case of Example 1.

Example 15

The procedure of Example 1 was performed by use of Superchlon 892L (200 parts) and Hardlen 13-LB (product of Toyo Kasei Kogyo, chlorinated content 26%, solid content 30%) (100 parts) instead of chlorinated polypropylene (Superchlon 892L) (300 parts) used in example 1. The adhesion creep test of the layered material showed 0 mm peeling after the material was allowed to stand for 24 hours. Both the room temperature adhesion test and thermal adhesion resistance test showed material breakage as in the case of Example 1.

Example 16

The procedure of Example 1 was performed by use of Superchlon 892L (200 parts) and Hardlen 15-LPB (product of Toyo Kasei Kogyo, chlorinated content 30%, solid content 30%) (100 parts) instead of chlorinated polypropylene (Superchlon 892L) (300 parts) used in example 1. The adhesion creep test of the layered material showed 0 mm peeling after the material was allowed to stand for 24 hours. Both the room temperature adhesion test and thermal adhesion resistance test showed material breakage as in the case of Example 1.

Example 17

The procedure of Example 1 was performed by use of a halogen lamp (QIR230/250V-3000UI: Ushio Inc.) instead of an infrared lamp. The adhesion creep test of the layered material showed 0 mm peeling after the material was allowed to stand for 24 hours. Both the room temperature adhesion test and thermal adhesion resistance test showed material breakage as in the case of Example 1.

Example 18

The procedure of Example 1 was performed by use of an equipart of BV7 instead of IRT used in example 1 and by use of a halogen lamp used in Example 18 instead of an infrared lamp. The adhesion creep test of the layered material shaved 0 mm peeling after the material was allowed to stand for 24 hours. Both the room temperature adhesion test and thermal adhesion resistance test showed material breakage as in the case of Example 1.

Comparative Example 1

A heat-curable adhesive (Hi-bon XA322-10, product of Hitachi. Chemical Polymer Co., Ltd.) was applied to a polypropylene test piece used in Example 1 in a coating amount (solid content) of 150 g/$m^2$, and PPF was laminated with the test piece in a manner similar to that of Example 1 (a total of ten equivalent sheets of test pieces were produced). The obtained layered materials were allowed to stand in a 23°C thermostatic chamber at a relative humidity of 50%. Each of the test pieces was taken out of the chamber every six hours, and the test pieces were subjected to the same evaluation test as in Example 1. 48 hours were required for obtaining the same final adhesion strength as obtained in Example 1.

Comparative Example 2

The procedure of Example 1 was performed, except that chlorinated polypropylene (Superchlon 892L) was not added. Adhesion performance was not developed due to absence of chlorinated polypropylene, and in the adhesion creep test the obtained layered material was immediately delaminated.

INDUSTRIAL APPLICABILITY

Using the photocurable adhesive composition of the present invention enables resin substrate and resin foam layered on the backside of vinylchloride leather to be bonded with excellent adhesion performance by safe and simple method, i.e., irradiation of light, in a short time, without any pretreatment such as primer treatment, to produce resin layered material exhibiting excellent mechanical performance in rigidity, heat resistance and impact resistance.

## Claims

1. A photocurable adhesive composition comprising the following compounds as essential components:

    a chlorinated polyolefin (a);
    a compound having a polymerizable unsaturated group (b); and
    a photopolymerization initiator (c).

2. The photocurable adhesive composition described in Claim 1 which further contains a tackifier (d).

3. The photocurable adhesive composition described in Claim 1 or 2, wherein the photopolymerization initiator has photosensitivity for visible light and/or near infrared light.

4. The photocurable adhesive composition described in any one of Claim 1 to 3, wherein the photopolymerization initiator comprises a combination of a cationic dye represented by formula (1):

$$D^+ \cdot A^- \qquad (1)$$

(wherein $D^+$ represents a dye cation having photosensitivity in a visible light or near infrared light region and $A^-$ represents an anion); and a organic boron compound represented by formula (2):

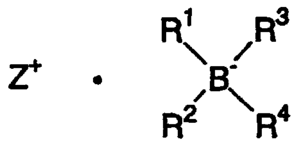

(2)

(wherein $Z^+$ represents an arbitrary cation; and each of $R^1$, $R^2$, $R^3$, and $R^4$ represents an alkyl group, an aryl group, an acyl group, an aralkyl group, an alkenyl group, an alkynyl group, a silyl group, a heterocyclic group, or a halogen atom).

5. The photocurable adhesive composition described in Claim 4, wherein the dye cation ($D^+$) is a cation of polymethine compounds or triarylmethane compounds.

6. A resin layered material formed by bonding a resin substrate to another substrate using the photocurable adhesive composition described in any one of Claim 1 to 5.

7. The resin layered material described in Claim 6 wherein the resin substrate is bonded to resin foam layered on the backside of the facing material.

8. The resin layered material described in Claim 7, wherein the facing material is at least one member selected from the group consisting of vinyl chloride leather, olefin elastomer, and cloth.

9. The resin layered material described in any one of Claim 6 to 8, wherein the resin substrate is a substrate main component of which is a polyolefin polymer or vinyl chloride resin.

10. The resin layered material described in Claim 9, wherein the resin substrate is a substrate main component of

which is a propylene polymer.

**11.** The resin layered material described in Claim 9, wherein the resin substrate formed of a propylene polymer is constituted by a composition comprising

a propylene polymer (e) not less than 60 wt% and
an inorganic filler (f) not more than 40 wt%.

**12.** The resin layered material described in Claim 10, wherein the resin substrate formed of a propylene polymer is constituted by a composition comprising

a propylene polymer (e) 30-80 wt%,
an inorganic filler (f) 0-30 wt%,
a modified propylene polymer (e') 5-50 wt%, and
an oligomer terminated with a functional group (g) 0.5-20 wt%.

**13.** The resin layered material described in Claim 12, wherein the modified propylene polymer is obtained by modifying a propylene polymer with an unsaturated compound having at least one functional group selected from the group consisting of a hydroxyl group, a carboxyl group, an amino group, and an epoxy group.

**14.** The resin layered material described in any one of Claim 6 to 10, wherein the resin substarte is formed of an ethylene-$\alpha$-olefin copolymer.

**15.** The resin layered material described in Claim 14, wherein the ethylene-$\alpha$-olefin copolymer is an ethylene-propylene copolymer.

**16.** The resin layered material described in any one of claim 7 to 15, which is constructed by bonding the surface of a resin substrate and the surface of the resin foam layered on the backside of the facing material using the photocurable adhesive composition described in any one of Claim 1 to 5 wherein both or either one of the surfaces are not subjected to a primer treatment.

**17.** The production method for a resin layered material described in any one of Claim 7 to 16 comprising coating the photocurable adhesive composition described in any one of Claim 1 to 5 on the surface of the resin foam layered on the backside of the facing material and/or the surface of the resin substrate; bonding of the two surfaces above; and curing the adhesive layer through light irradiation.

## INTERNATIONAL SEARCH REPORT

International application No.
PCT/JP98/03227

A. CLASSIFICATION OF SUBJECT MATTER
Int.Cl[6] C09J4/06, B32B7/12, 5/18

According to International Patent Classification (IPC) or to both national classification and IPC

B. FIELDS SEARCHED

Minimum documentation searched (classification system followed by classification symbols)
Int.Cl[6] C09J4/06, 4/00, B32B7/12, 5/18

Documentation searched other than minimum documentation to the extent that such documents are included in the fields searched

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP, 8-253736, A (Kansai Paint Co., Ltd.), 1 October, 1996 (01. 10. 96), Claims 1 to 4 ; Par. Nos. [0002], [0010] to [0041], [0042] to [0044], [0060] to [0062] (Family: none) | 1, 6, 9-12<br>1-17 |
| X<br>Y | JP, 58-162640, A (Kansai Paint Co., Ltd.), 27 September, 1983 (27. 09. 83), Claims ; page 2, lower right column, line 6 to page 5, lower left column, line 6 (Family: none) | 1<br>1-17 |
| X<br>Y | JP, 5-320582, A (Hayakawa Gomu K.K.), 3 December, 1993 (03. 12. 93), Claims 1 to 16 ; Par. Nos. [0001], [0017], [0020], [0021] to [0024], [0027] (Family: none) | 1, 2<br>1-17 |
| X<br>Y | JP, 4-142322, A (Toyo Kasei Kogyo Co., Ltd.), 15 May, 1992 (15. 05. 92), Claims 1, 2 ; page 1, lower right column, lines 3 to 15 ; page 3, upper right column, line 7 to page 4, lower right column, line 7 (Family: none) | 1<br>1-17 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 26 September, 1998 (26. 09. 98) | 6 October, 1998 (06. 10. 98) |
| Name and mailing address of the ISA/<br>Japanese Patent Office<br>Facsimile No. | Authorized officer<br>Telephone No. |

Form PCT/ISA/210 (second sheet) (July 1992)

**INTERNATIONAL SEARCH REPORT**

International application No.
PCT/JP98/03227

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 4-15280, A (Toagosei Chemical Industry Co., Ltd.), 20 January, 1992 (20. 01. 92), Claims ; page 1, lower right column, line 16 to page 2, upper left column, line 4 ; page 2, upper right column to, line 5 to page 5, lower right column, last line (Family: none) | 3 |
| Y | JP, 4-80204, A (Showa Denko K.K.), 13 March, 1992 (13. 03. 92), Claims ; page 2, upper right column, line 7 to page 6, lower left column, line 11 (Family: none) | 3-5 |
| Y | JP, 3-111402, A (Showa Denko K.K.), 13 May, 1991 (13. 05. 91), Claims ; page 2, upper left column, 4th line from the bottom to page 5, upper right column, last line (Family: none) | 3-5 |
| Y | JP, 7-125120, A (Showa Denko K.K.), 16 May, 1995 (16. 05. 95), Claims 1, 2 ; Par. Nos. [0003] to [0039] & EP, 433870, A1 | 6-15 |
| Y | JP, 2-3474, A (The Kendoll Co.), 9 January, 1990 (09. 01. 90), Claims 1 to 27 & EP, 326276, A3 | 16, 17 |

Form PCT/ISA/210 (continuation of second sheet) (July 1992)